# EUROPEAN PATENT APPLICATION

(11) **EP 1 871 129 A2**
(43) Date of publication of application: **26.12.2007**
(21) Application number: 06255953.9
(22) Date of filing: 21.11.2006
(51) Int. Cl.: H04Q 7/38, H04Q 7/30, H04Q 7/32

(54) **Communication system with a frame format suitable for WiMax and 802.11 and corresponding base station and terminal**

(30) Priority: 20.06.2006 JP 2006169867
(71) Applicant: Fujitsu Ltd., Kawasaki-shi, Kanagawa 211-8588 (JP)
(72) Inventor: Machida, Mamoru, c/o Fujitsu Limited, Kawasaki-shi Kanagawa 21-8588 (JP)
(74) Representative: Stebbing, Timothy Charles

(57) **Abstract**

A communication system forms a frame format such that each of a plurality of base stations is assigned with one of a plurality of frequency bands, which are orthogonally frequency divided. In accordance with the frame format, the plurality of the base stations transmit a frame signal including a preamble signal, a broadcast signal that allows the plurality of the terminal apparatuses to commonly recognize information indicating an area of presence of transmission data disposed within the assigned frequency band, and the transmission data disposed within the assigned frequency band, periodically in a downlink frame period. Each of the plurality of the terminal apparatuses detects a path with the maximum level from the preamble signal in the received frame signal to establish synchronization with the base station based on the detected path to acquire the transmission data in the frequency band recognized based on the broadcast signal. In this way, properties of WiMAX (IEEE 802.16) and IEEE 802.11 communication schemes can be combined.

## Description

This application is based upon and claims the benefit of priority from the prior Japanese Patent Application No. 2006-169867, filed on June 20, 2006 .

The present invention relates to a communication system that effectively utilizes a format **such as WiMAX** (802. 16.2004, 802.16e) at a location where a base station is disposed.

In the WiMAX (World Interoperability for Microwave Access) mode, a cellular system is formed with a communication area having a cell radius of more than a few Km. In the modulating mode of the IEEE 802.16-2004 standard, a method is used to temporally divide a frequency available in data communication in accordance with the orthogonal frequency division multiplexing (OFDM) mode.

The IEEE 802.16e standard relates to a mobile broadband system and can divide data not only temporally in accordance with the OFDM mode but also by sub-carriers in accordance with the orthogonal frequency division multiple access (OFDMA) mode. A base station and a terminal apparatus are in a master/slave configuration and the base station performs line allocation, etc.

For example, Published Japanese Translation of PCT application No. 2006-507753 discloses a system to which the OFDM mode is applied, i.e., a mobile communication system that disposes a synchronization preamble and a cell searching preamble in a downlink sub-frame to synchronize time and frequencies and perform cell searching more efficiently.

On the other hand, the IEEE 802.11 series standard represented by wireless LAN and WAVE forms a communication area with a cell radius of a few hundred meters. The modulation mode thereof is the OFDM mode. Each terminal apparatus monitors a usage status of frequencies in accordance with the CSMA (Carrier Sense multiple Access) mode, etc., to perform transmission while avoiding collision. When transmission is not performed, the terminal apparatus is always in a receiving state and searches a beginning (preamble) signal at the beginning of information transmitted by other terminal apparatuses and the terminal apparatuses are asynchronous.

In the case of the WiMAX mode, it takes more than a few seconds to establish a link because of initial setting, procedures of linking a line such as a call request, and authentication. In the case of a cell radius of a few hundred meters, a mobile terminal apparatus may exit a communication area while establishing a link. When adjacent terminal apparatuses attempt to communicate with each other, lines may be wastefully used since a base station receives data for communication through the base station.

On the other hand, in asynchronous systems such as the IEEE 802.11 series standard, communication may not be performed reliably when communication is desired.

**Embodiments** - of the present invention can provide a novel communication system that couples advantages of the WiMAX mode and the IEEE 802.11 series standard and that performs a WiMAX link establishing sequence in a simplified manner to reduce setup time and enable communication in a small area.

**Embodiments -** of the present invention can provide a novel communication system that a base station performs line allocation only to enable direct communication of adjacent terminal apparatuses and that the terminal apparatuses can communicate with each other in an area without a base station.

A first aspect of the present invention provides a communication system that communicates between a plurality of base stations and a plurality of terminal apparatuses in accordance with the orthogonal frequency division multiplexing mode; the system forms a frame format such that each of the plurality of the base stations is assigned with one of a plurality of frequency bands, which are orthogonally frequency divided; in accordance with the frame format, the plurality of the base stations transmits a frame signal including a preamble signal, a broadcast signal that allows the plurality of the terminal apparatuses to commonly recognize information indicating an area of presence of transmission data disposed within the assigned frequency band, and the transmission data disposed within the assigned frequency band, periodically in a downlink frame period; and each of the plurality of the terminal apparatuses detects a path with the maximum level from the preamble signal in the received frame signal to establish synchronization with the base station based on the detected path to acquire the transmission data in the frequency band recognized based on the broadcast signal.

Due to such a feature, broadcast communication can be transmitted and received at high speed by readjusting a MAC process based on the WiMAX mode.

In the first aspect, if a plurality of the preamble signals is received, each of the plurality of the terminal apparatuses acquires transmission data of each frequency band recognized based on the broadcast signals from a plurality of base stations corresponding to the plurality of the received preamble signals.

In the first aspect, each of the plurality of the terminal apparatuses is assigned with a transmission area of an uplink request signal and burst data; if a plurality of preamble signals is received, each of the plurality of the terminal apparatuses transmits the uplink request signal in synchronization with the timing of the base station of the preamble signal having a high correlation value; the base station receiving the uplink request signal transmits a broadcast signal that instructs an individual connection identifier and an uplink area corresponding to the individual connection identifier after a predetermined number of frames; and the terminal apparatus transmitting the uplink request signal transmits information to be transmitted to the corresponding base station with the use of the uplink area corresponding to the individual connection identifier.

By adding the uplink as described above, both broadcast and individual communication can be transmitted and received at high speed.

In the above aspect, an asynchronous communication period for the plurality of the terminal apparatuses is further disposed between consecutive downlink frame periods and, during the asynchronous communication period, each of the plurality of the terminal apparatuses can detect that the other terminal apparatus does not perform transmission and then perform data transmission to the other terminal apparatus.

The uplink period instructed by the base station for the uplink request signal and the asynchronous communication period may be switched at the timing in synchronization with GPS.

During the asynchronous communication period, the base station terminates a process for the uplink.

By changing a method of using the uplink area as compared to the second embodiment as described above, the communication between terminal apparatuses can be achieved.

In the above aspect, the uplink period instructed by the base station for the uplink request signal and the asynchronous communication period may be set within the same downlink frame period.

As a result, by dividing the uplink area and the area of the communication between the terminal apparatuses, the WiMAX basis and the 802.11 basis can be easily merged.

In the above aspect, a plurality of sub-channels is assigned to each of a plurality of frequency bands; a predetermined sub-channel of the plurality of the sub-channels is assigned as an area for transmitting the uplink request signal and the burst data to the plurality of the terminal apparatuses; if a plurality of the preamble signals is received, each of the plurality of the terminal apparatuses transmits the uplink request signal in synchronization with the timing of the base station of the preamble signal having a high correlation value; the base station receiving the uplink request signal transmits a broadcast signal that instructs an individual connection identifier and an uplink area corresponding to the individual connection identifier after a predetermined number of frames; the terminal apparatus transmitting the uplink request signal transmits information to be transmitted to the corresponding base station with the use of the uplink area corresponding to the individual connection identifier; an asynchronous communication period for the plurality of the terminal apparatuses is further disposed between consecutive downlink frame periods; and during the asynchronous communication period, each of the plurality of the terminal apparatuses detects that the other terminal apparatus does not perform transmission and then performs data transmission to the other terminal apparatus.

By dividing the uplink area and the area of the communication between the terminal apparatuses in sub-channels as described above, the communication between the terminal apparatuses can be achieved under the supervision of the base station.

**Reference will now be made, by way of example only, to the accompanying drawings in which:**
Fig. 1 shows an example of a configuration to which a communication system of the present invention can be applied.
Fig. 2 shows another application configuration example of a communication system according to the present invention.
Fig. 3 shows a common configuration conceptual diagram of base stations #0, #1,...#n and terminal apparatuses #10, #11,...#1n.
Fig. 4 shows an example of a signal frame format corresponding to a first embodiment.
Fig. 5 shows an example of a base station configuration applied to the first embodiment using the frame format shown in Fig. 4.
Fig. 6 shows an example of a terminal apparatus configuration applied to the first embodiment using the frame format shown in Fig. 4.
Fig. 7 shows an operation flow of the first embodiment.
Fig. 8 is an example of a signal frame format corresponding to a second embodiment according to the present invention.
Fig. 9 shows an example of a base station configuration applied to the second embodiment using the frame format shown in Fig. 8.
Fig. 10 shows an example of a terminal apparatus configuration applied to the second embodiment using the frame format shown in Fig. 8.
Fig. 11 shows an operation flow of the second embodiment (part 1) .
Fig. 12 shows an operation flow of the second embodiment (part 2).
Fig. 13 is an example of a signal frame corresponding to a third embodiment according to the present invention.
Fig. 14 is a block diagram of an example of a base station configuration applied to the third embodiment using the frame format shown in Fig. 13.
Fig. 15 is a block diagram of an example of a terminal apparatus configuration applied to the third embodiment using the frame format shown in Fig. 13.
Fig. 16 shows an operation flow of the third embodiment.
Fig. 17 is an example of a signal frame format corresponding to a fourth embodiment according to the present invention.
Fig. 18 shows an operation flow of the fourth embodiment.
Fig. 19 is an example of a signal frame format corresponding to a fifth embodiment according to the present invention.
Fig. 20 is a configuration example of a terminal apparatus of a fifth embodiment according to the present invention.
Fig. 21 shows an operation flow of the fifth embodiment.

Embodiments of the present invention will now be described with reference to the drawings. The embodiments are for the purpose of understanding of the present invention and do not limit the technical field of the present invention.

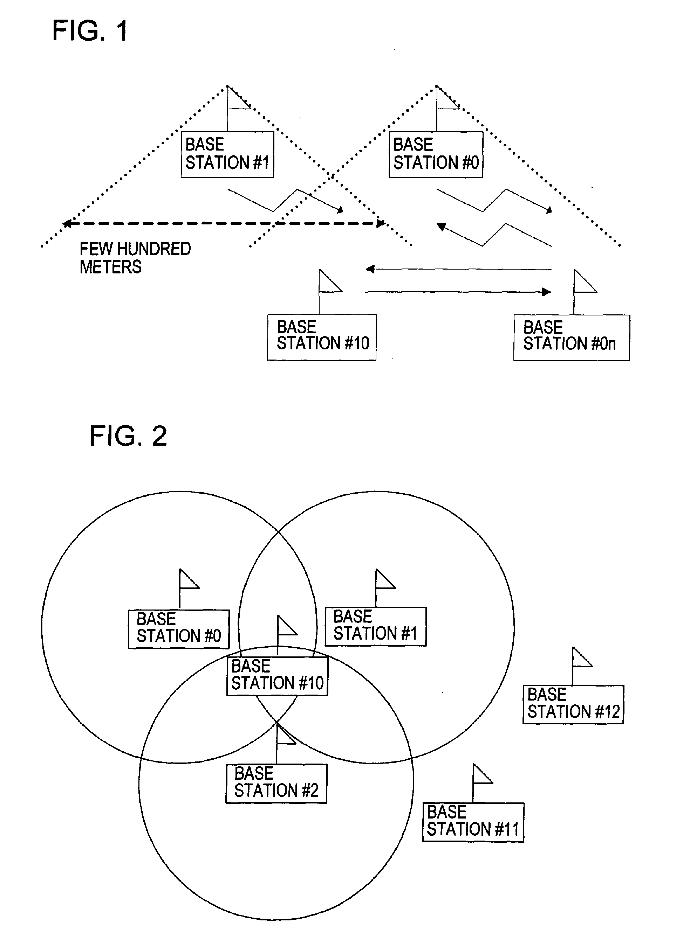

Fig. 1 is an example of a configuration to which a communication system of the present invention can be applied. A plurality of base stations #0, #1, ... #n is disposed at intervals with a communication range of a few hundred meters. In the system shown in Fig. 1, a plurality of terminal apparatuses #10, #11,...#1n is mobile terminal apparatus for the plurality of the base stations #0, #1,...#n and travels in parallel with the base stations.

Fig. 2 is another application configuration example of a communication system according to the present invention. For example, three base stations #0, #1, #2 are arranged with cell areas overlapped. A plurality of the terminal apparatuses #10, #11,...#1n freely changes directions and travels in the communication area. In such a case, in the case of a mobile terminal apparatus, it is assumed that the movement of the apparatus switches the cell to which the apparatus belongs and that the apparatus may exit the cell.

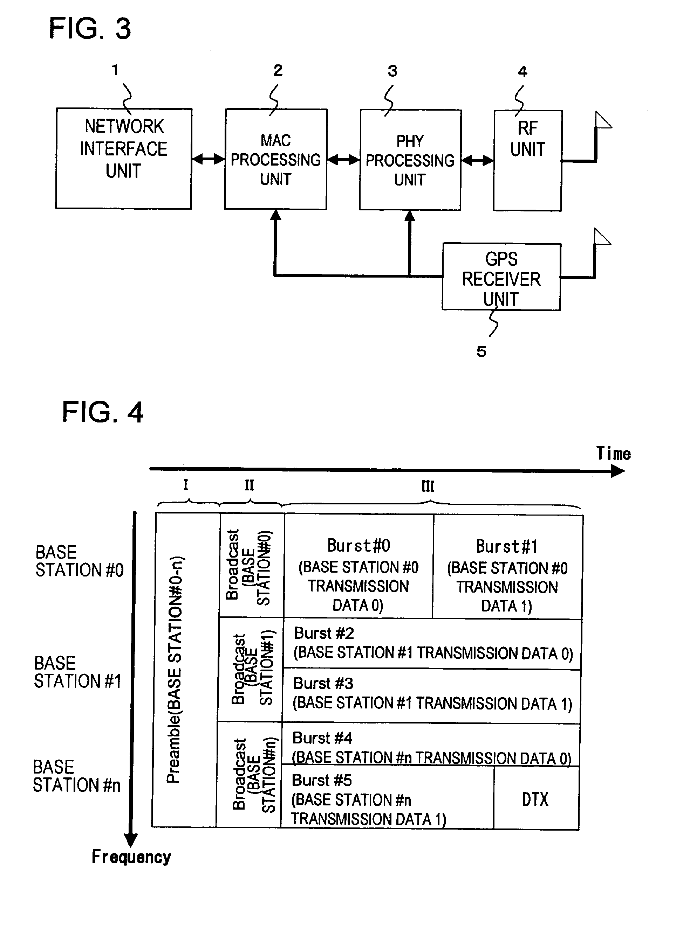

Fig. 3 is a common configuration conceptual diagram of the base stations #0, #1,...#n and the terminal apparatuses #10, #11,...#1n.

In the configuration of the base station of Fig. 3, a network interface unit 1 includes an interface function of inputting network side data to the base station to transmit the data to a media access control (MAC) processing unit 2. The MAC processing unit 2 includes a MAC layer function such as encoding of transmission data and correction of errors.

A physical layer (PHY: Physical) processing unit 3 includes a transmission function and a reception function and the transmission function includes generation of signal frame preambles, generation of broadcast/burst signals, and modulation and multiplexing processes of these generated signals.

A radio frequency transmitting/receiving (RF) unit 4 includes a transmitting/receiving function of performing RF (radio frequency) modulation of the base band signal output of the PHY processing unit 3 and demodulating from RF to the base band. A GPS (Global Positioning System) receiver unit 5 includes a function of generating a reference clock time and an internal timing signal for synchronizing the base station and the terminal apparatus.

A first embodiment according to the present invention will be described based on the base station and the terminal apparatus with such a configuration. In the first embodiment, the base station includes a transmitting function and does not need a receiving function

Fig. 4 is an example of a signal frame format corresponding to the first embodiment and is compliant with the WiMAX standard. The IEEE 802.16-2004 standard relating to the WiMAX uses a modulation mode of the orthogonal frequency division multiplexing (OFDM) mode to use a method of temporally dividing a frequency band used for each piece of data.

On the other hand, the IEEE 802.16e standard relating to the mobile broad band system uses the orthogonal frequency division multiple access (OFDMA) mode to divide a frequency band used for each piece of data not only temporally in accordance with the OFDM mode but also by sub-carriers.

As shown in Fig. 4, in the frame format of the OFDMS physical layer, logical numbers of sub-channels are assigned to a frequency-axis direction of the vertical axis and numbers of OFDM symbols are assigned to a time-axis direction of the horizontal axis.

One frame includes a preamble I, a broadcast message II including a frame control header (FCH), downlink allocation information (DL_MAP), and uplink allocation information (UL_MAP), and a plurality of downlink data bursts III loaded with transmission data.

The preamble I includes synchronization (sync) data for synchronizing a frequency and time with a downlink sub-frame in the receiving terminal apparatus and is transmitted concurrently through all the channels. A plurality of preamble patterns is prepared and has a constant length.

The frame control header (FCH) in the broadcast message II regulates a profile (coding method, length, etc.) of a first subsequent burst. The downlink allocation information (DL_MAP) in the broadcast message II includes mapping information of the data burst in the downlink sub-frame. The uplink allocation information (UL_MAP) includes mapping information of the data burst in the up sub-frame.

Each data burst includes an integer number of OFDM symbols and is assigned with a modulation mode (QPSK, 16QAM, 64QAM, etc.), an encoding mode, and an encoding rate in accordance with the burst profile regulated by the downlink allocation information (DL_MAP).

The preamble I is modulated by the BPSK (Binary Phase Shift Keying) mode, which assigns zero to a phase of a carrier and one to an inverse phase of a carrier (phase shifted 180 degrees).

The broadcast message II is modulated by QPSK (Quadrature Phase Shift Keying), which uses a total of four **phases,** i.e., a reference sinusoidal wave and waves with phases shifted 90 degrees, 180 degrees, and 270 degrees to assign different values to the **phases.**

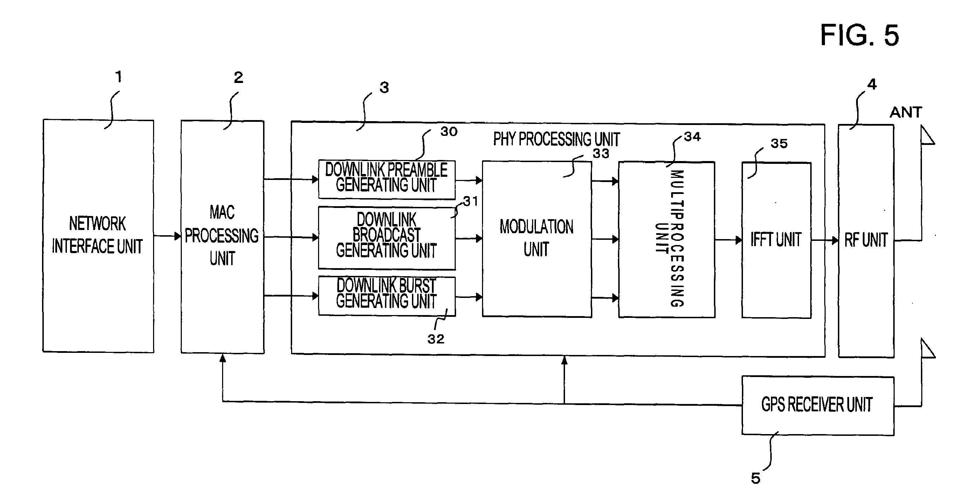

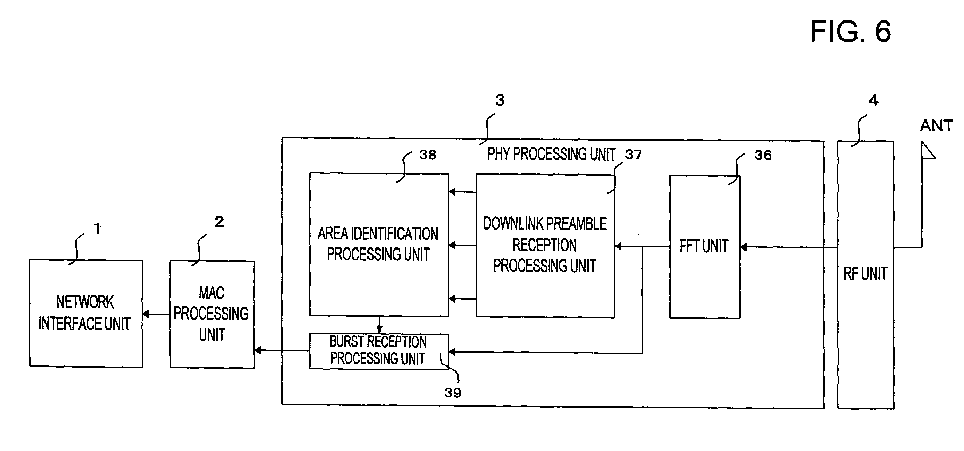

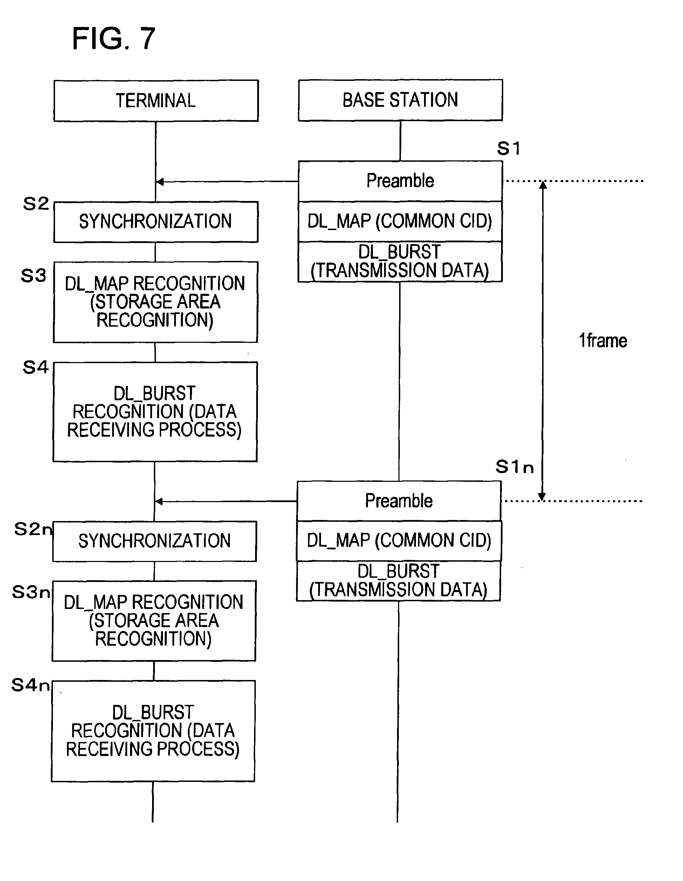

Figs. 5 and 6 are block diagrams of a base station configuration example and a terminal apparatus configuration example that are applied to the first embodiment using the frame format shown in Fig. 4. Fig. 7 is a diagram of an operation flow of the first embodiment.

The base station configuration shown in Fig. 5 is the same as the configuration shown in Fig. 3 and includes the transmitting function only. Fig. 5 shows a detail configuration of the PHY processing unit 3. The terminal apparatus configuration shown in Fig. 6 is a configuration including the receiving function only, corresponding to the transmitting function configuration of the base station and basically performs an inverse signal process of the base station configuration.

In Fig. 5, the physical layer (PHY) processing unit 3 includes a downlink preamble (DL-preamble) generating unit 30, a downlink broadcast (DL-broadcast) generating unit 31, a downlink burst (DL-burst) generating unit 32, a modulation processing unit 33, a multiprocessing unit 34, and an inverse fast Fourier transform (IFFT) unit 35.

The downlink preamble generating unit 30 generates a preamble symbol as instructed from the media access control (MAC) processing unit 2. The downlink broadcast generating unit 31 and the downlink burst generating unit 32 perform a PHY layer process of the transmission data from the MAC processing unit 2 based on instructions from the MAC processing unit 2. That is, the transmission data are allocated in the format shown in Fig. 4.

The modulation processing unit 33 modulates the signals from each generating unit 30, 31, 32 in accordance with QPSK, BPSK, multi-valued modulation, etc. The multiprocessing unit 34 multiplexes the signals from each generating unit 30, 31, 32 based on the usage area instruction from the MAC processing unit 2. The IFFT unit 35 performs the inverse fast Fourier transform with parameters instructed by the MAC processing unit 2.

The radio frequency transmitting/receiving (RF) unit 4 performs radio frequency modulation of the base band signal of the PHY processing unit 3 to output the signal to an antenna ANT. The GPS receiver unit 5 a function of synchronizing the base stations based on a clock signal received from a GPS system not shown and a function of generating a clock signal for internal timing. **Here, GPS includes any satellite positioning system.**

The base station with such a configuration broadcasts a frame signal in the frame form shown in Fig. 4 (step S1 of Fig. 7).

A downlink frame signal includes a common connection ID (CID) of the terminal apparatuses in the downlink allocation information (DL_MAP) after the preamble, and the information is followed by the downlink burst signal.

The downlink frame signal is sent intermittently at intervals of one frame (steps S1, 1n).

On the other hand, Fig. 6 shows a configuration example of the receiving function of the terminal apparatus configuration (alternatively, the same receiving function configuration is used if the base station includes the receiving function in embodiments described later).

The RF unit 4 of Fig. 6 demodulates the radio frequency signal received by the antenna ANT to the base band signal. An FFT (Fast Fourier Transform) unit 36 performs the fast Fourier transform, etc.

A downlink preamble reception processing unit 37 includes a function of detecting the preamble signal transmitted by the base station to establish synchronization (step S2 of Fig. 7). The timing is sent to an area identification processing unit 38 to allow a storage area in the downlink frame signal to be recognized (step S3).

A burst reception processing unit 39 is controlled such that the downlink burst is received in the area recognized by the area identification processing unit 38 (step S4).

The received burst signal passes through the MAC unit 2 and the signal is output to the outside by the network interface unit 1.

In the first embodiment, the terminal apparatus can receive each of signals broadcasted from the base station at intervals of one frame (S1, S1n) without checking the link formation between the base station and the terminal apparatus. Therefore, the broadcast communication can be performed at high speed based on the WiMAX.

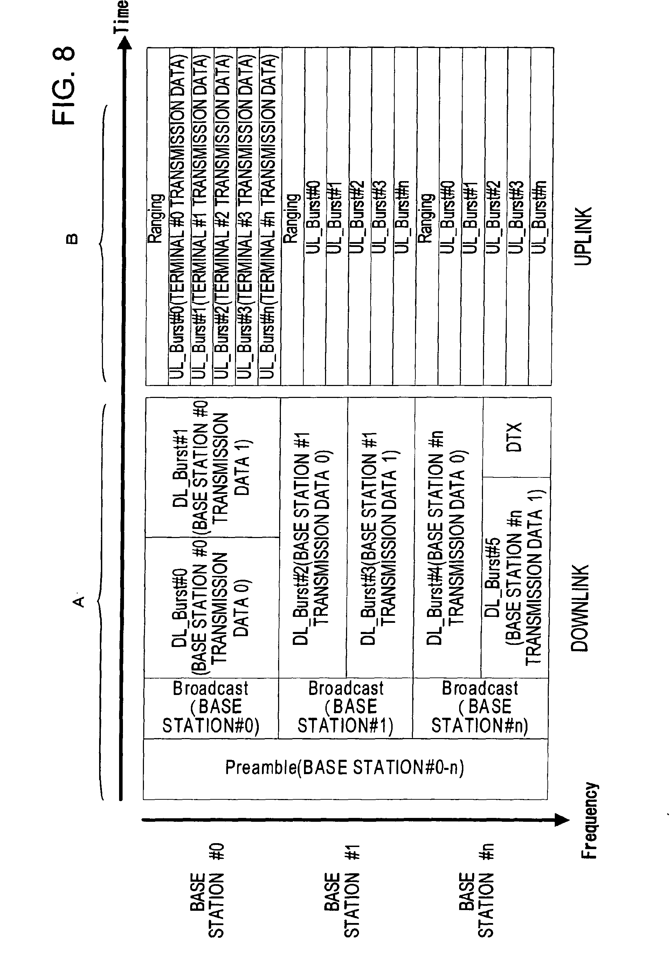

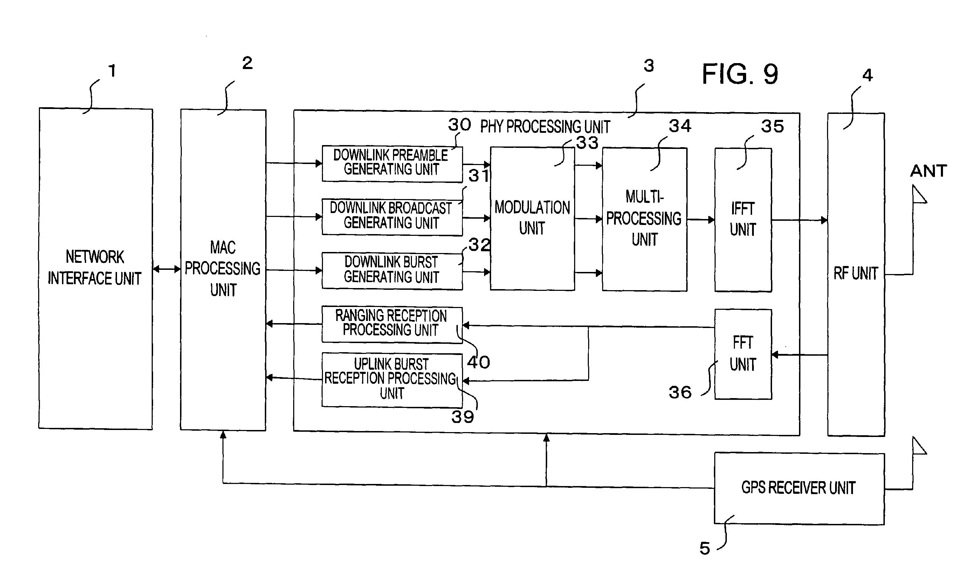

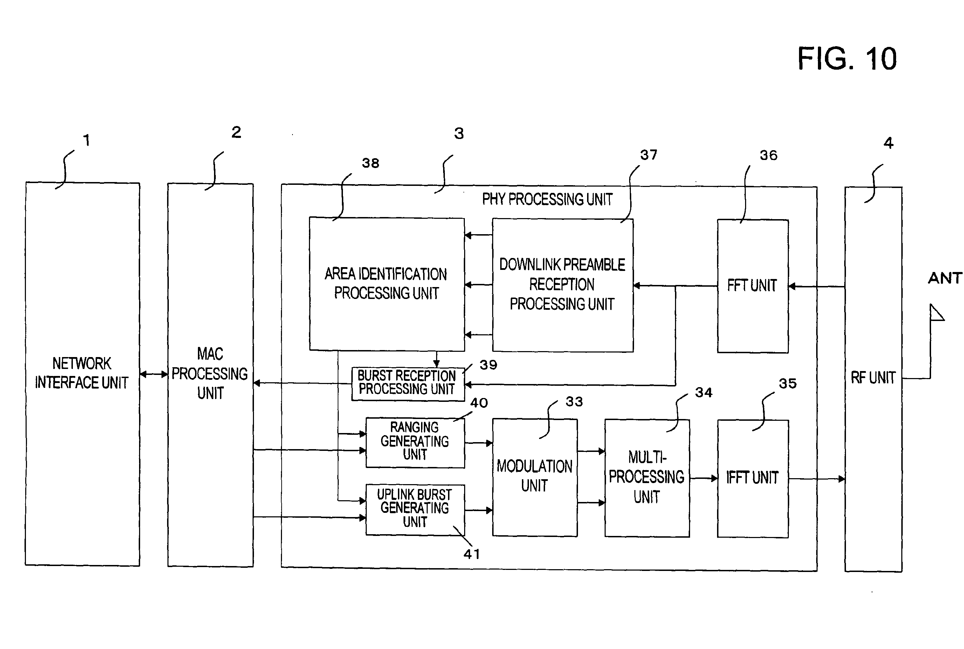

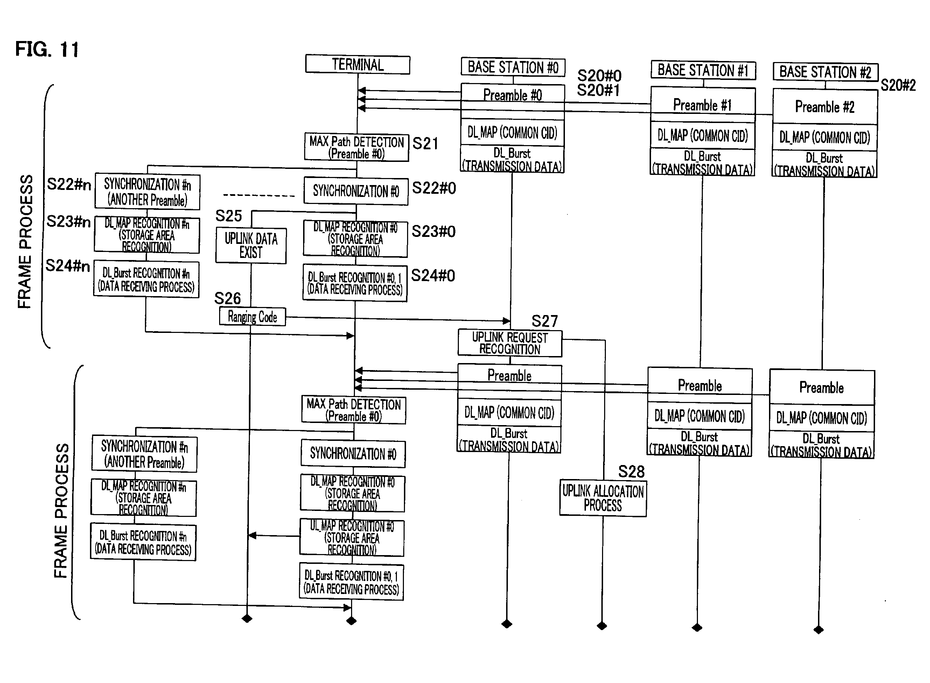

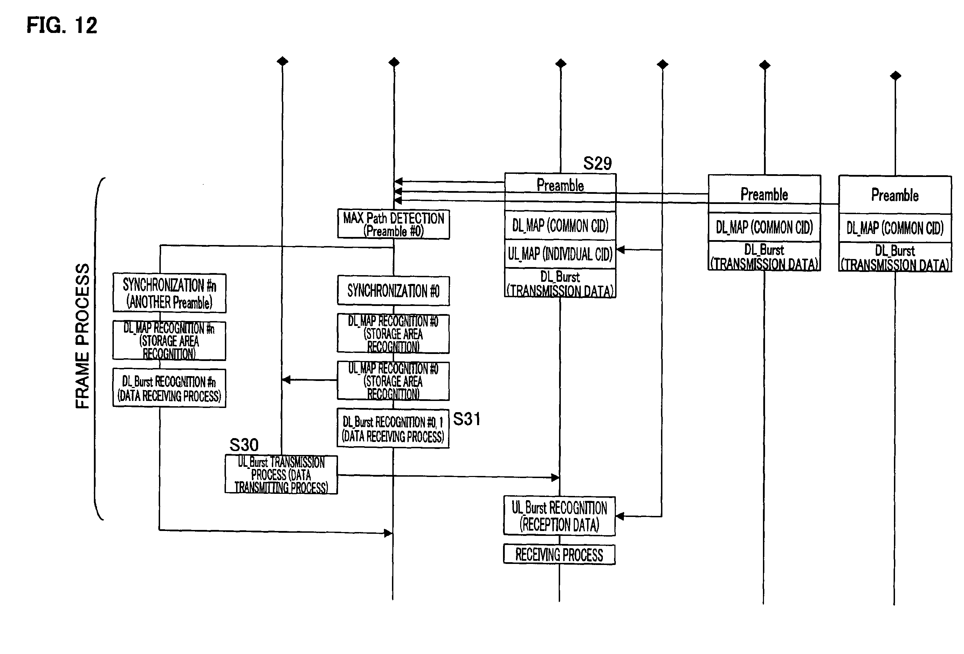

Fig. 8 is an example of a signal frame format corresponding to a second embodiment according to the present invention. Figs. 9 and 10 are block diagrams of a base station configuration example and a terminal apparatus configuration example that are applied to the second embodiment using the frame format shown in Fig. 8. Figs. 11 and 12 are diagrams of an operation flow of the second embodiment.

In the second embodiment, an uplink is added to the first embodiment. That is, in Fig. 8, a frame of A is a downlink frame format, which is sent from the base station to the terminal apparatus. The downlink frame A is the same as that shown in Fig. 4. On the other hand, an uplink frame B is inserted characteristically following the downlink frame A.

The format of the uplink frame B is compliant with the WiMAX standard. Due to the presence of the uplink frame B, a reception functioning unit is included in the base station shown in Fig. 9 corresponding to Fig. 5 and a transmission functioning unit is included in the terminal apparatus shown in Fig. 10 corresponding to Fig. 6.

The processing operation will be described with reference to Figs. 11 and 12.

Each of a plurality of the base station #0, #1, #2 transmits a preamble signal (steps S20a, 20b, 20c). As is the case with the first embodiment, each terminal apparatus establishes synchronization and receives transmission data from the downlink burst signal (DL_Burst) based on the area information indicated by the downlink allocation information (DL_MAP) (steps S22#0 to S22#n).

If a plurality of preambles can be detected from a plurality of the base station #0, #1, #2, an uplink request signal, i.e., a ranging signal is transmitted (step S26) at the timing of the base station of the preamble with the highest correlation value (step S25). In the example of Fig. 11, the correlation value of the base station #0 is the highest.

The ranging signal includes a ranging code and a ranging area and is determined fixedly from the serial number of the terminal apparatus, etc. When the ranging signal is received (step S27), the base station #0 allocates an uplink (step S28) and sends a notification of an individual connection identifier (CID) and an area instruction corresponding to the individual CID with a broadcast signal after two frames to instruct the uplink.

The terminal apparatus performs the reception process as described above and transmits information to be transmitted in the uplink burst signal in accordance with the instructed individual CID (step S30). The terminal apparatus performs the reception process of the downlink burst signal transmitted individually in accordance with the individual CID (step S31).

In the second embodiment, by adding the uplink, both broadcast and individual communication can be transmitted and received at high speed.

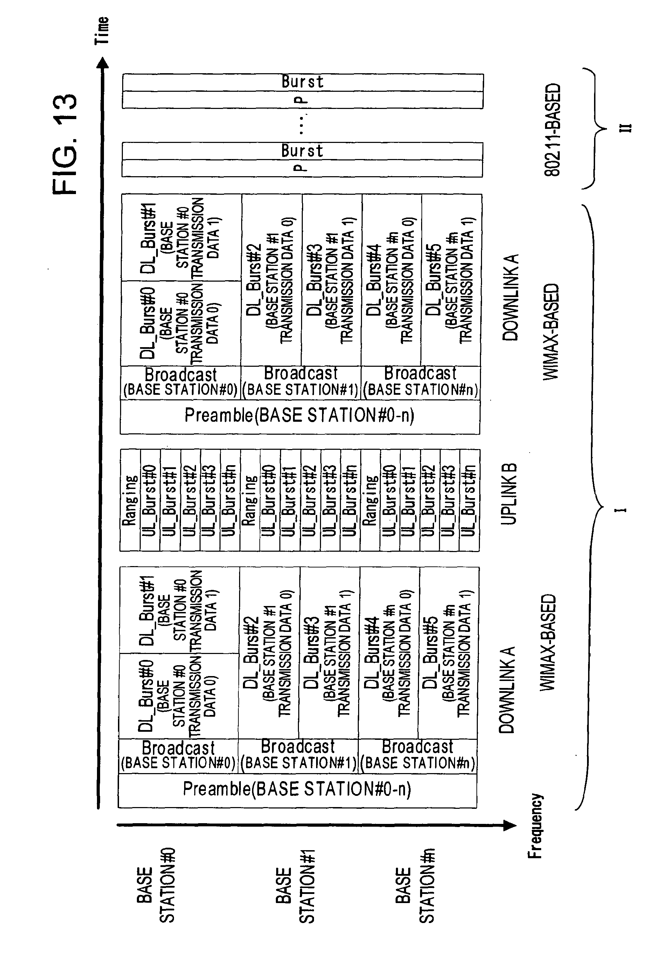

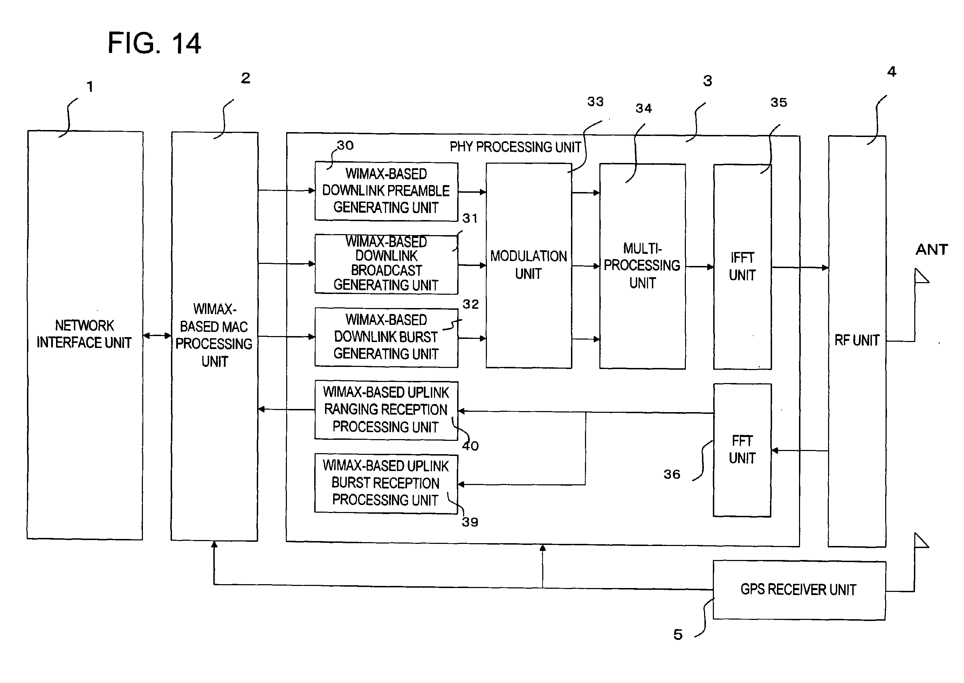

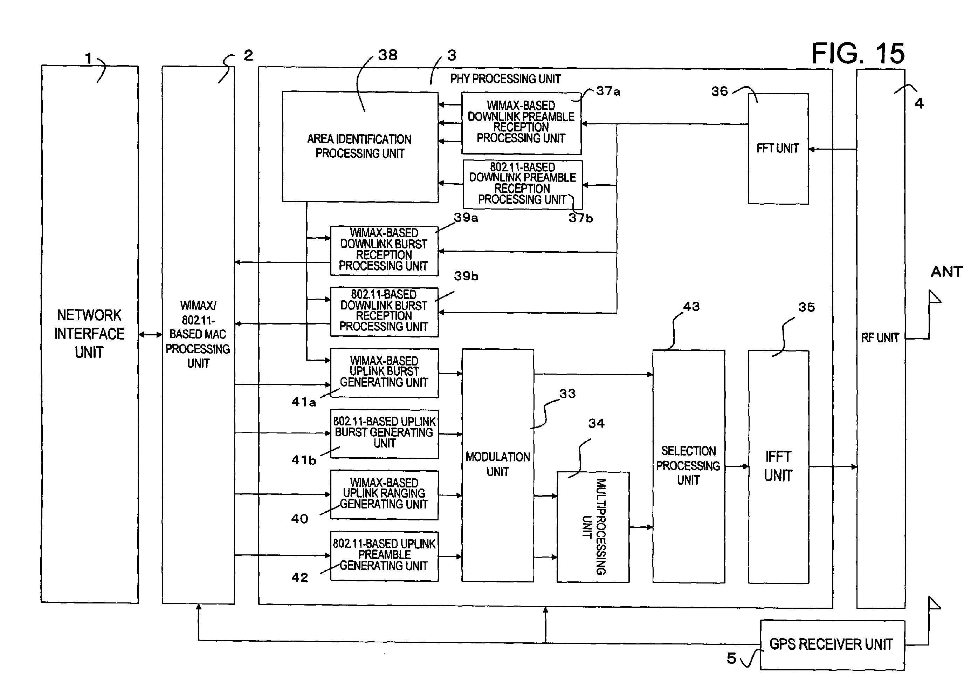

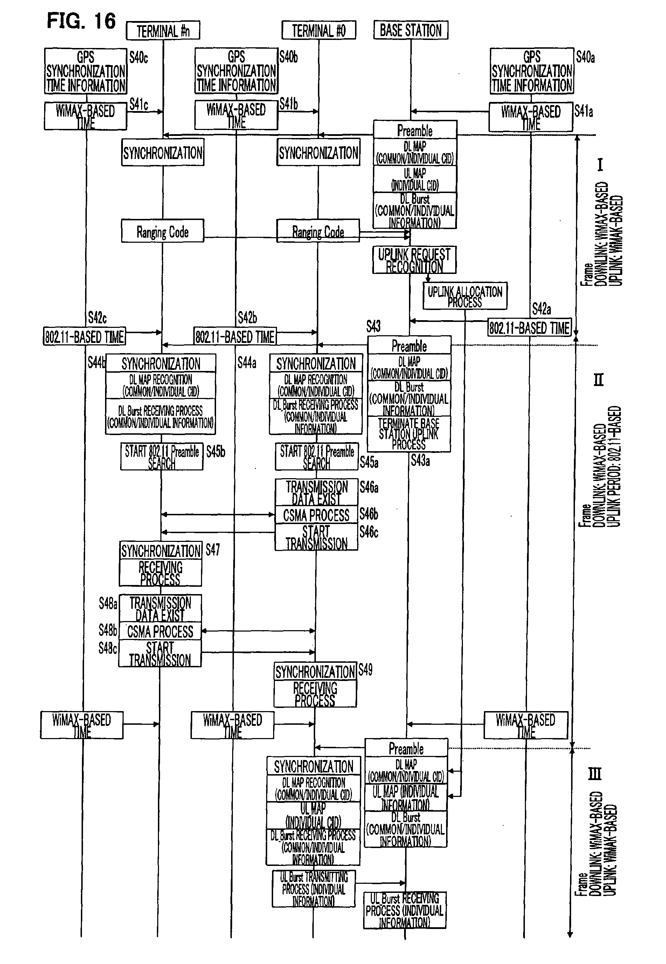

A format shown in Fig. 13 is an example of a signal frame format corresponding to a third embodiment according to the present invention. Figs. 14 and 15 are block diagrams of a base station configuration example and a terminal apparatus configuration example that are applied to the third embodiment using the frame format shown in Fig. 13. Fig. 16 is a diagram of an operation flow of the third embodiment.

The third embodiment is characterized in that the uplink section is switched to a WiMAX uplink and an IEEE 802.11-based line in the second embodiment. The WiMAX uplink is the same as the description of the second embodiment. The IEEE 802 .11-based line is utilized for wireless LAN connection between the terminal apparatuses.

In Fig. 13, the WiMAX standard format period I and the IEEE 802.11 standard format period II are shown in a time-divided manner. The WiMAX standard format period I includes the downlink format A and the uplink format B for the base station and the terminal apparatus and is the same as the format shown in Fig. 8 of the second embodiment. The IEEE 802.11 standard format period II is asynchronous and is utilized for signal transmission between the terminal apparatuses using a format including a preamble P and a burst signal.

Fig. 14 is a base station configuration example applied to the third embodiment and is basically the same as the base station configuration of the second embodiment shown in Fig. 9 since the WiMAX standard format A is used for the downlink.

To support the WiMAX standard format A and the IEEE 802.11 standard format B, the terminal apparatus configuration shown in Fig. 15 includes downlink preamble reception processing units, i.e., a preamble reception processing unit 37a corresponding to the WiMAX basis and a preamble reception processing unit 37b corresponding to the 802.11 basis. Similarly, this configuration includes downlink burst reception processing units, i.e., a burst reception processing unit 39a **which operates using WiMAX and a burst reception processing unit 39b operating in accordance with the 802.11 standard.**

On the other hand, the transmission functioning units of the terminal apparatus include a ranging generating unit 40 and a burst generating unit 41a corresponding to the WiMAX basis. The transmission functioning units also include a preamble generating unit 42 and a burst generating unit 41b corresponding to the 802.11 basis.

A signal is generated by a signal generating units of the transmission functioning unit of the terminal apparatus, is input to the modulation processing unit 33 for modulation such as QPSK, BPSK, and multi-valued modulation. The multiprocessing unit 34 multiplexes the WiMAX-based ranging signal and the burst signal, which are input to a selection processing unit 43.

The output of the preamble generating unit 42 and the burst generating unit 41b corresponding to the 802.11 basis is input to the selection processing unit 43 without going through the multiprocessing unit 34.

The selection processing unit 43 switches and selectively outputs the WiMAX-based format signal or the 802.11-based format signal in accordance with whether the transmission is performed to the base station or the terminal apparatus. The output of the selection processing unit 43 goes through the IFFT unit 35 and is converted by the RF unit into a radio frequency, which is sent from the antenna ANT.

The operation of the apparatus configuration of the third embodiment will be described with reference to a process flow of Fig. 16.

In both the base station and the terminal apparatus, the GPS receiver unit 5 acquires GPS synchronization time information (steps S40a to 40c), which is used as the WiMAX-based reference time (steps S41a to 41c). Therefore, the WiMAX-based communication area and the 802.11-based communication area can be switched at the timing synchronized with a GPS system.

In Fig. 16, if the WiMAX basis is applied to both the uplink and the downlink (periods of I and III of Fig. 16), the operation is the same as the second embodiment.

On the other hand, if the WiMAX-based communication area is used in the downlink direction and the 802.11-based communication area is used in the uplink direction (period of II of Fig. 16), the 802.11-based reference time is used based on the GPS synchronization time information S40a (steps S42a to 42c).

The downlink signal from the base station to the terminal apparatus is the same as the case that the WiMAX basis is applied to both the uplink and the downlink (periods of I and III of Fig. 16), and the WiMAX-based format is used to transmit the preamble, the common and individual CID with the DL-MAP, and the common and individual information with the downlink (DL) burst to the terminal apparatus (step S43). However, in the 802.11-based communication, the base station terminates the uplink processes and terminates acceptance of the uplink request (ranging) signal and the receiving process of the uplink burst signal (step S43a).

Each terminal apparatus establish synchronization to receive the common and individual information from the base station (steps S44a, 44b).

The terminal apparatus makes the shift to the 802.11-based period, performs the receiving process constantly, and detects the preamble (steps S45a, 45b). If transmission data exist (steps S46a, 48a), the CSMA (Carrier Sense Multiple Access) process is performed to confirm that **no** other terminal apparatus **already performs** transmission between the terminal apparatuses (steps S46b, 48b) and if **no** other terminal apparatus **is performing** transmission, the terminal apparatus performs transmission (steps S46c, 48c).

Since the terminal apparatus on the receiving side is in the state of detecting the preamble constantly (steps S45a, 45b), the preamble can be detected and the receiving process is performed in accordance with the 802.11 (steps S47, 49).

As described above, in the 802.11-based section (II), the communication is performed between the terminal apparatuses without the intermediation of the base station.

If the transmission cannot be terminated within the 802.11 section because of asynchronous communication, the transmission is forcibly terminated and is changed to the WiMAX-based process (period of III).

As described above, in the third embodiment, the communication between terminal apparatuses can be achieved by changing **the mode of communication employed for the uplink, compared with the second embodiment.**

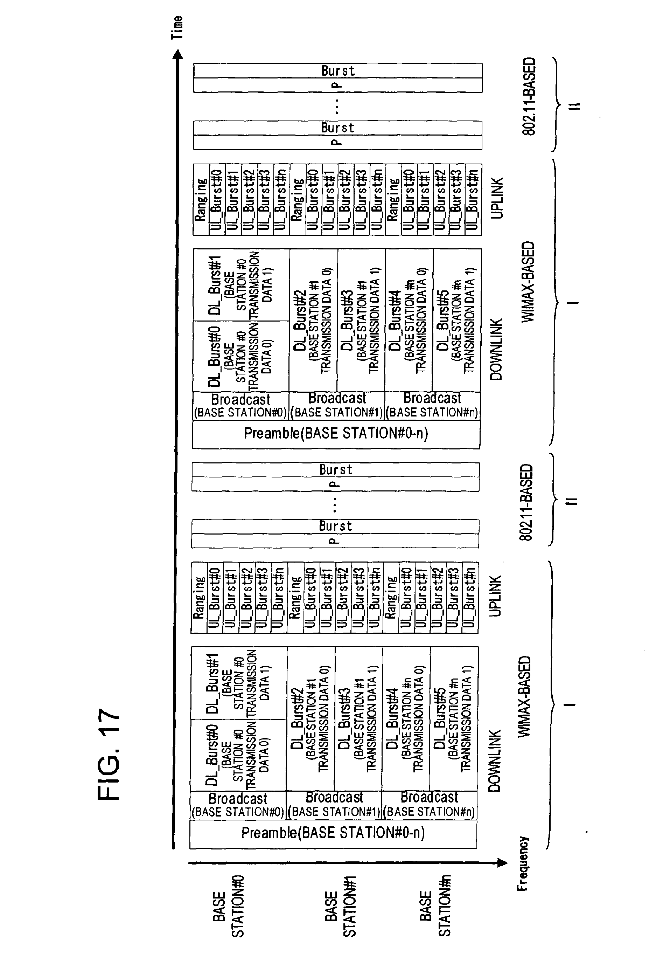

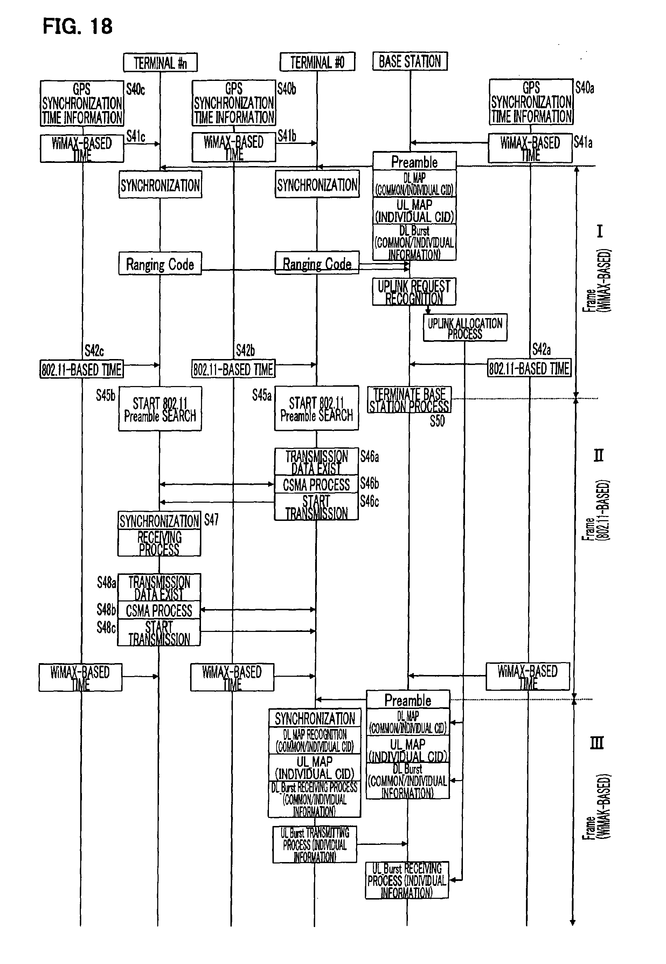

Fig. 17 is an example of a signal frame format corresponding to a fourth embodiment according to the present invention. Fig. 18 is a diagram of an operation flow of the fourth embodiment.

As compared to the third embodiment, the fourth embodiment is characterized by an aspect of repeating the 802.11-based line periodically in the WiMAX uplink section. Therefore, as shown in Fig. 17, in a format applied to the fourth embodiment, the WiMAX standard format and the 802.11 standard format are divided temporally.

Configuration examples of the base station and the terminal apparatus are the same as the configurations of the third embodiment shown in Figs. 14 and 15.

As compared to the operation flow of the third embodiment shown in Fig. 16, the transmission of the WiMAX-based signal in the downlink direction from the base station (step S43) is omitted in the operation flow shown in Fig. 18 and, correspondingly, the receiving process in the terminal apparatus (steps S44a, S44b) is also omitted.

With reference to the 802.11-based time (steps S42a, 42b, 42c) based on the GPS synchronization time information (step S40a), the terminal apparatus starts the 802.11 preamble search (steps S45a, 45b).

If transmission data exist (steps S46a, 48a), the CSMA (Carrier Sense Multiple Access) process is performed to confirm that the other terminal apparatus does not perform transmission between the terminal apparatuses (steps S46b, 48b) and if the other terminal apparatus does not perform transmission, the terminal apparatus performs transmission (steps S46c, 48c).

Since the terminal apparatus on the receiving side detects the preamble constantly (steps S45a, 45b), the preamble can be detected and the receiving process is performed in accordance with the 802.11 (steps S47, 49).

On the other hand, if the 802.11-based communication is performed between the terminal apparatuses, the base station terminates the base station process (step S50).

In the fourth embodiment, by dividing the uplink area and the area of the communication between the terminal apparatuses, the WiMAX basis and the 802.11 basis can be easily merged.

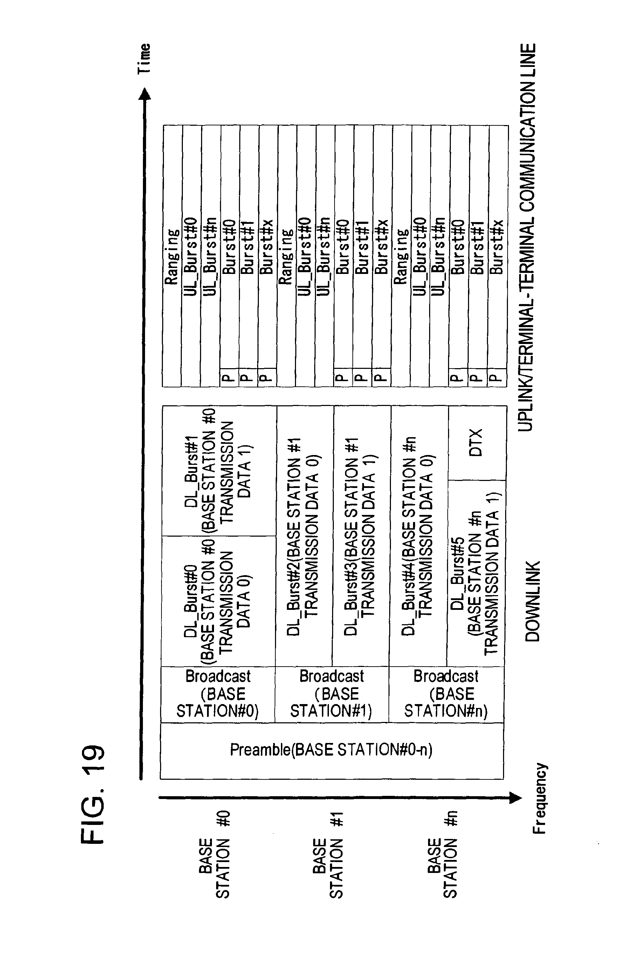

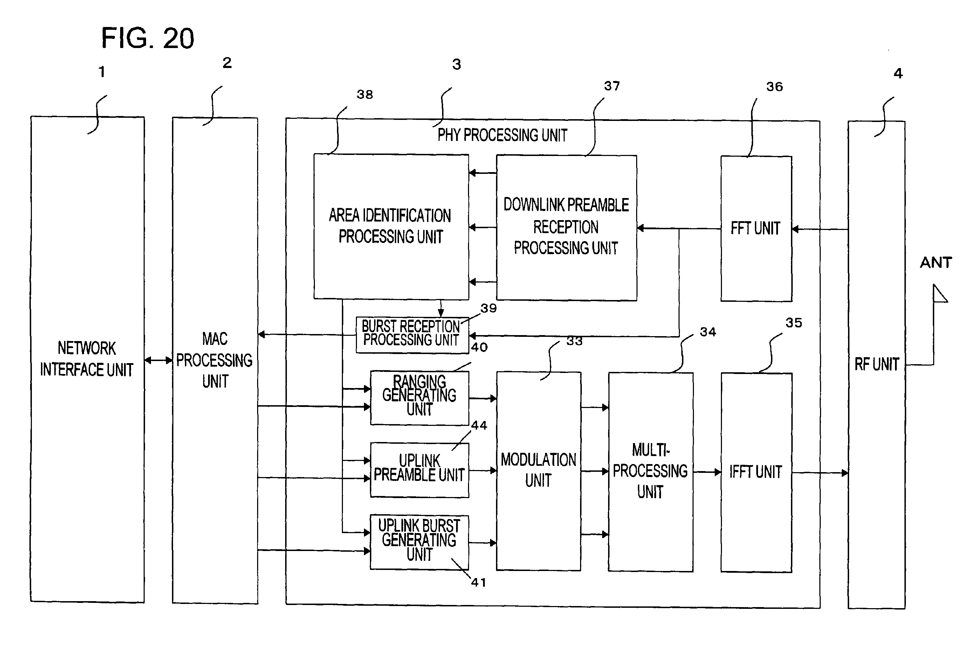

Fig. 19 is an example of a signal frame format corresponding to a fifth embodiment according to the present invention. A base station configuration example is the same as the configuration of Fig. 9 shown as the base station configuration of the second embodiment. On the other hand, a terminal apparatus configuration must be configured correspondingly to features of the fifth embodiment and an example of the configuration is shown in Fig. 20.

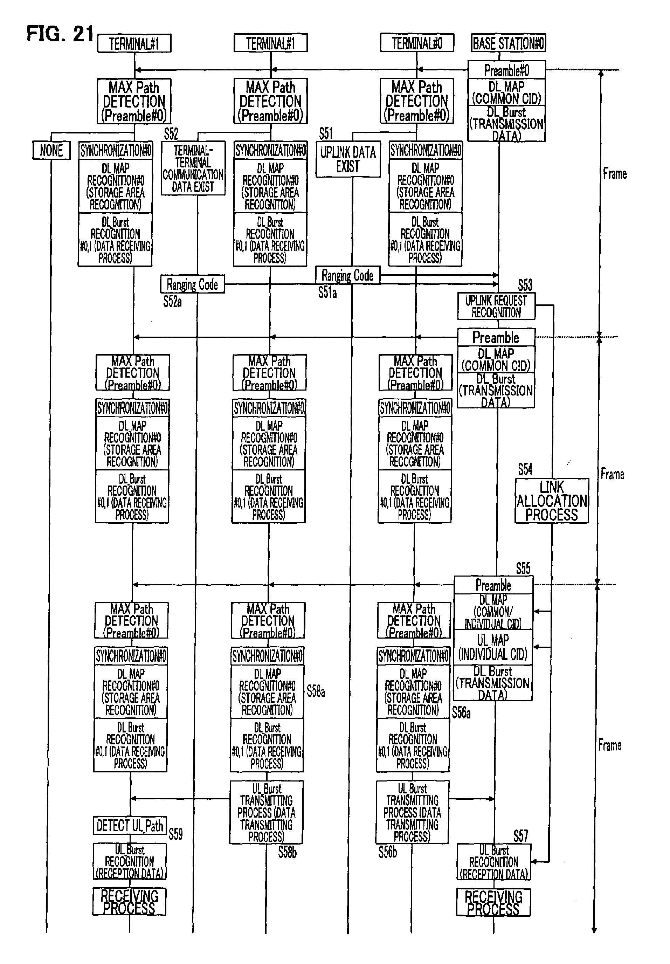

Fig. 21 is a diagram of an operation flow of the fifth embodiment. The fifth embodiment is characterized by using the WiMAX uplink to perform the communication between the terminal apparatuses, as compared to the second embodiment. Therefore, in the format shown in Fig. 19, the downlink is the same as that of the second embodiment shown in Fig. 8. The uplink is divided into each sub-channel. In the case of a 20MHz band, up to 60 sub-channels can be achieved. If the base station is divided equally, 20 sub-channels are achieved for one base station.

In the fifth embodiment, for example, among 20 sub-channels, 1 sub-channel is allocated for the ranging (line request); 9 sub-channels are allocated for the uplink; and 10 channels are allocated for the communication between the terminal apparatuses. When using 10 sub-channels, first, the ranging signal is transmitted to perform the line allocation in the base station as is the case of using the uplink. The uplink preamble signal (P) and burst signal conforming to IEEE 802.16.2004 are transmitted to the line area permitted by the base station.

The other terminal apparatus checks the presence of the terminal apparatus transmitting the broadcast signal and the area information and detects the preamble of the corresponding area to load data.

To perform the above function, as shown in Fig. 20, the terminal apparatus includes an uplink preamble generating unit 44 as compared to the configuration shown in Fig. 10.

In the operation flow shown in Fig. 21, the terminal apparatus includes a function of detecting generation of data transmitted as transmission data to the base station with the use of the uplink (step S51) and a function of detecting generation of data for the communication between the terminal apparatuses (step S52).

Correspondingly, the terminal apparatus transmits the uplink request (ranging) to the base station (steps S51a, S52a). The base station recognizes the uplink request (step S53) and performs the line allocation (step S54).

Correspondingly to the line allocation, data including the downlink area information (DL-MAP) are transmitted through the downlink to the corresponding terminal apparatus based on the WiMAX (step S55).

On the terminal apparatus side, the terminal apparatus requesting the uplink for data transmission based on the WiMAX (the terminal apparatus #0 in the example of Fig. 21) recognizes the storage area of the line area information (DL-MAP) (step S56a) and transmits an uplink burst signal to the base station (step S56b). The base station recognizes the uplink burst signal and performs the receiving process (step S57).

On the other hand, the terminal apparatus requesting the uplink for the communication between the terminal apparatuses (the terminal apparatus #1 in the example of Fig. 21) recognizes the line area information (DL-MAP) (step S58a) and transmits data for the other terminal apparatus through the corresponding sub-channel (step S58b).

As a result, the other corresponding terminal apparatus can receive (step S59) the data between the terminal apparatuses from the WiMAX-based downlink sub-channel.

By dividing the uplink area and the area of the communication between the terminal apparatuses in sub-channels as described above, the communication between the terminal apparatuses can be achieved under the supervision of the base station. In the fifth embodiment, since the WiMAX mode and the 802.11 mode are not switched temporally, the GPS receiver unit and the 802.11-based blocks of the PHY processing unit are not needed.

The foregoing description of the embodiments is not intended to limit the invention to the particular details of the examples illustrated. Any suitable modification and equivalents may be resorted to the scope of the invention. All features and advantages of the invention which fall within the scope of the invention are covered by the appended claims.

## Claims

1. A communication system that communicates between a plurality of base stations and a plurality of terminal apparatuses in accordance with the orthogonal frequency division multiplexing mode,
the system forming a frame format such that each of the plurality of the base stations is assigned with one of a plurality of frequency bands, which are orthogonally frequency divided,
in accordance with the frame format, the plurality of the base stations transmitting a frame signal including a preamble signal, a broadcast signal that allows the plurality of the terminal apparatuses to commonly recognize information indicating an area of presence of transmission data disposed within the assigned frequency band, and the transmission data disposed within the assigned frequency band, periodically in a downlink frame period,
each of the plurality of the terminal apparatuses detecting a path with the maximum level from the preamble signal in the received frame signal to establish synchronization with the base station based on the detected path to acquire the transmission data in the frequency band recognized based on the broadcast signal.

2. The communication system according to claim 1, wherein
when a plurality of the preamble signals is received, each of the plurality of the terminal apparatuses acquires transmission data of respective frequency band recognized based on the broadcast signals from a plurality of base stations corresponding to the plurality of the received preamble signals.

3. The communication system according to claim 1, wherein
each of the plurality of the terminal apparatuses is assigned with a transmission area for an uplink request signal and burst data, wherein
when a plurality of preamble signals is received, each of the plurality of the terminal apparatuses transmits the uplink request signal in synchronization with the timing of the base station of the preamble signal having a high correlation value, wherein
the base station receiving the uplink request signal transmits a broadcast signal that instructs an individual connection identifier and an uplink area corresponding to the individual connection identifier after a predetermined number of frames, and wherein
the terminal apparatus transmitting the uplink request signal transmits information to be transmitted to the corresponding base station with the use of the uplink area corresponding to the individual connection identifier.

4. The communication system according to claim 3, wherein
an asynchronous communication period for the plurality of the terminal apparatuses is further disposed between consecutive downlink frame periods, and wherein
during the asynchronous communication period, each of the plurality of the terminal apparatuses detects that no other terminal apparatus **performs** transmission and then performs data transmission to **another** terminal apparatus.

5. The communication system according to claim 4, wherein
the uplink period instructed by the base station for the uplink request signal and the asynchronous communication period are switched at the timing in synchronization with GPS.

6. The communication system according to claim 4, wherein
during the asynchronous communication period, the base station terminates a process for the uplink.

7. The communication system of note 4, wherein
the uplink period instructed by the base station for the uplink request signal and the asynchronous communication period are set within the same downlink frame period.

8. The communication system according to claim 1, wherein
a plurality of sub-channels is assigned to each of a plurality of frequency bands, wherein
a predetermined sub-channel of the plurality of the sub-channels is assigned as an area for transmitting the uplink request signal and the burst data to the plurality of the terminal apparatuses, wherein
if a plurality of the preamble signals is received, each of the plurality of the terminal apparatuses transmits the uplink request signal in synchronization with the timing of the base station of the preamble signal having a high correlation value, wherein
the base station receiving the uplink request signal transmits a broadcast signal that instructs an individual connection identifier and an uplink area corresponding to the individual connection identifier after a predetermined number of frames, wherein
the terminal apparatus transmitting the uplink request signal transmits information to be transmitted to the corresponding base station with the use of the uplink area corresponding to the individual connection identifier, wherein
an asynchronous communication period for the plurality of the terminal apparatuses is further disposed between consecutive downlink frame periods, and wherein
during the asynchronous communication period, each of the plurality of the terminal apparatuses detects that another terminal apparatus does not perform transmission and then performs data transmission to the other terminal apparatus.

9. A base station in a communication system that communicates between a plurality of base stations and a plurality of terminal apparatuses in accordance with the orthogonal frequency division multiplexing mode, the base station comprising:
an interface that inputs network side data to the base station;
a encoding unit that performs encoding and error correction processes for the transmission data;
a first generating unit that generates a broadband signal including a frame control header, downlink allocation information, and uplink allocation information;
a disposing unit that disposes a preamble signal, the broadband signal, and the transmission data in a format corresponding to the WiMAX standard;
a second generating unit that generates an orthogonal frequency division multiple access signal from a frame signal disposed in the format corresponding to the WiMAX standard; and
a converting unit that converts the generated orthogonal frequency division multiple access signal to a radio frequency signal.

10. The base station of note 9, further comprising:
a means that generates a reference signal for the operation of the components with a clock signal from a GPS system.

11. A terminal apparatus in a communication system that communicates between a plurality of base stations and a plurality of terminal apparatuses in accordance with the orthogonal frequency division multiplexing mode, the base station including an interface that inputs network side data to the base station; a encoding unit that performs encoding and error correction processes for the transmission data; a first generating unit that generates a broadband signal including a frame control header, downlink allocation information, and uplink allocation information; a disposing unit that disposes a preamble signal, the broadband signal, and the transmission data in a format corresponding to the WiMAX standard; a second generating unit that generates an orthogonal frequency division multiple access signal from a frame signal disposed in the format corresponding to the WiMAX standard; and a converting unit that converts the generated orthogonal frequency division multiple access signal to a radio frequency signal, and the terminal apparatus receiving data transmitted from the base station, wherein the terminal apparatus comprises:
a receiving unit receiving data and demodulating the received data;
a transforming unit performing a fast Fourier transform process in the WiMAX standard;
a first detecting unit detecting a preamble signal from the received data converted by the transforming unit that performs a fast Fourier transform process;
a second detecting unit detecting all preamble signals exceeding a threshold in the first detecting unit;
a receiving unit receiving a broadband signal including the frame control header, the downlink allocation information, and the uplink allocation information based on a detection signal of the preamble signal;
a recognizing unit recognizing a necessary data area from the received broadband signal;
a notifying unit notifying a burst signal processing unit of the recognized area;
a unit performing a receiving process of a burst signal based on the recognized area;
a unit performing a process including the decoding and the error correction of the received burst signal; and
an output unit outputting the error-corrected signal to an external apparatus.
